# EUROPEAN PATENT APPLICATION

(11) **EP 2 818 991 A1**
(43) Date of publication of application: **31.12.2014**
(21) Application number: 14153217.6
(22) Date of filing: 30.01.2014
(51) Int. Cl.: G06F 3/042, G06F 3/046

(54) **Electronic apparatus and touch sensing method thereof**

(30) Priority: 28.06.2013 KR 20130075659
(71) Applicant: Samsung Electronics Co., Ltd, Gyeonggi-do 443-742 (KR)
(72) Inventor: Choi, Hyun-mook, Seoul (KR); Kim, Jong-hoon, Gyeonggi-do (KR); Choi, Kyoung-oh, Seoul (KR); Han, Young-ran, Seoul (KR)
(74) Representative: Hewett, Jonathan Michael Richard

(57) **Abstract**

An electronic apparatus is provided. The electronic apparatus includes a touch sensor configured to sense a touch on a screen using a first touch method or a second touch method, and a controller configured to control the touch sensor to selectively apply a touch method of the first touch method and the second touch method, sensed according to a type of touch unit.

## Description

The present invention relates to an electronic apparatus and a touch sensing method thereof. More particularly, the present invention relates to an electronic apparatus which supports a plurality of touch methods, and a touch sensing method thereof.

In recent years, with advances in electronic technology, many electronic apparatuses capable of providing various functions through a touch operation have been developed.

The electronic apparatuses sense a touch operation of a user through various methods such as a resistive type, a capacitive type, an infrared type, and an electromagnetic resonance (EMR) type. In some cases, one electronic apparatus senses a touch operation of a user through a plurality of touch methods.

For example, in an electronic apparatus employing an infrared type of touch sensor in the related art, a touch unit such as a pen, as well as a hand that is close to the electronic apparatus is used. The electronic apparatus senses a touch and performs an operation which corresponds to the touch. An EMR type method may be additionally applied, where the pen is recognized through both the EMR method and the infrared method. This results in a conflict between the two touch methods, and the result is that the touch is not correctly recognized.

Therefore, there is a need for a method of preventing conflict between different touch methods in electronic apparatuses which support a plurality of touch methods.

One or more exemplary embodiments of the present invention are to provide an electronic apparatus configured to selectively apply one touch method from among a plurality of touch methods in order to sense a touch, and a touch sensing method thereof.

According to an aspect of an exemplary embodiment, there is provided an electronic apparatus. The electronic apparatus may include: a touch sensor configured to sense a touch on a screen using a first touch method or a second touch method; and a controller configured to control the touch sensor to sense the touch by selectively applying one of the first touch method and the second touch method which are sensed according to the type of touch unit.

The first touch method may be an electromagnetic resonance (EMR) type of touch method, and the second touch method may be an infrared type of touch method. The touch sensor may include a first sensing module configured to sense a touch using the EMR type of touch method, and a second sensing module configured to sense a touch using the infrared type of touch method.

A sensing distance of the first sensing module may be preset to be larger than the sensing distance of the second sensing module, based on the screen.

When a touch unit configured to sense both the first and second sensing modules is close to the sensing distance of the first sensing module, the controller may sense a touch of the touch unit through the first sensing module and may turn off the second sensing module.

The touch unit which is configured to sense the first and second sensing modules may be implemented as a digitizer pen.

When a touch unit not configured to sense the first sensing module is close to the sensing distance of the second sensing module, the controller may sense a touch of the touch unit through the second sensing module and may turn off the first sensing module.

According to an aspect of an exemplary embodiment, a method of sensing a touch of an electronic apparatus configured to sense a touch on a screen using a first touch method or a second touch method is provided. The method may include: sensing the touch through one of the first touch method and the second touch method, in which the touch is sensed according to a type of touch unit; and controlling to sense a touch by applying the sensed touch method.

The first touch method may be an electromagnetic resonance (EMR) type of touch method, and the second touch method may be an infrared type of touch method. The electronic apparatus may include a first sensing module configured to sense the touch using the EMR type of touch method, and a second sensing module configured to sense the touch using the infrared method.

A sensing distance of the first sensing module may be preset to be larger than that of the second sensing module, based on the screen.

When a touch unit configured to sense both the first and second sensing modules is close to the sensing distance of the first sensing module, the controlling may include sensing a touch of the touch unit through the first sensing module and may turn off the second sensing module.

The touch unit configured to sense the first and second sensing modules may be a digitizer pen.

When a touch unit is not configured to sense the first sensing module and is close to the sensing distance of the second sensing module, the controlling may include sensing the touch of the touch unit through the second sensing module and turning off the first sensing module.

According to the above-described various exemplary embodiments, various touch units used in a plurality of touch methods can be used, without conflict, in order to improve the convenience of a user.

An aspect of an exemplary embodiment may provide an electronic apparatus supporting a plurality of touch methods, the electronic apparatus including: a touch sensor configured to sense a touch by a touch unit on a screen using a first touch method or a second touch method, wherein the first touch method is an electromagnetic resonance (EMR) type, and the second touch method is an infrared type; and a controller configured to control the touch sensor to selectively apply one of the first touch method and the second touch method sensed according to a type of touch unit.

The touch sensor may include: a first sensing module configured to sense the touch using the EMR type; and a second sensing module configured to sense the touch using the infrared type.

A sensing distance of the first sensing module may be preset to be larger than that of the second sensing module based on the screen.

The controller may be configured to sense a touch of the touch unit through the first sensing module and is configured to turn off the second sensing module when a touch unit configured to be sensed in both the first and second sensing modules is close to the sensing distance of the first sensing module.

The touch unit configured to be sensed in the first and second sensing modules may be a digitizer pen.

In addition, when a touch unit not configured to be sensed in the first sensing module is close to a sensing distance of the second sensing module, the controller senses a touch to the second sensing module and is configured to turn off the first sensing module.

Additional aspects and advantages of the exemplary embodiments will be set forth in the detailed description, will be obvious from the detailed description, or may be learned by practicing the exemplary embodiments.

The above and/or other aspects will be more apparent by describing the exemplary embodiments in detail, with reference to the accompanying drawings, in which:
FIG. 1 is a block diagram which illustrates a touch sensing system, according to an exemplary embodiment;
FIG. 2 is a block diagram which illustrates a configuration of an electronic apparatus, according to an exemplary embodiment;
FIG. 3 is a view illustrating a method of sensing proximity or a touch in an infrared touch sensing method and an EMR touch sensing method according to an exemplary embodiment;
FIG. 4 is a flowchart which illustrates an operation of an electronic apparatus according to an exemplary embodiment; and
FIG. 5 is a flowchart which illustrates a touch sensing method according to an exemplary embodiment.

Hereinafter, exemplary embodiments will be described in more detail with reference to the accompanying drawings.

In the following description, the same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

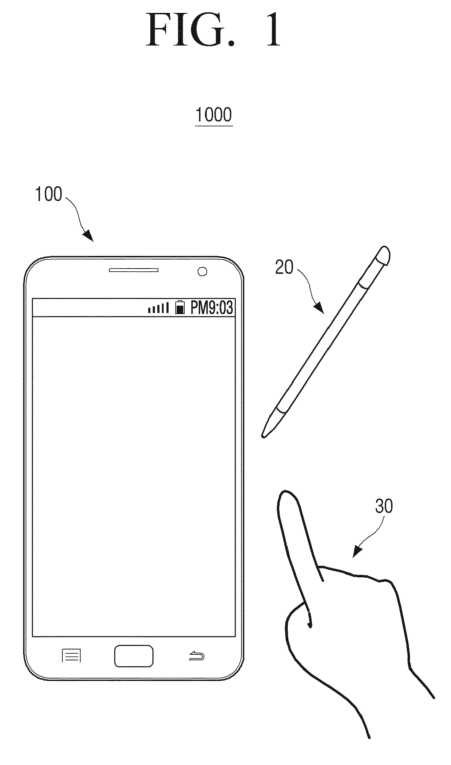

FIG. 1 is a view which illustrates a touch sensing system according to an exemplary embodiment. Referring to FIG. 1, a touch sensing system 1000 may include an electronic apparatus 100, a first touch unit 20, and a second touch unit 30.

As illustrated in FIG. 1, the electronic apparatus 100 may be a portable phone, and the first touch unit 20 and the second touch unit 30 may be a pen and a hand. However, this is merely for convenience of description, and the first touch unit 20 and the second touch unit 30 may be implemented by various types of devices.

In the touch sensing system 1000, a user touches a screen of the electronic apparatus 100 to execute various functions which are supported by the electronic apparatus 100 in a state in which the user grasps the first touch unit 20 or the second touch unit 30. For example, the user may input a handwriting image on the screen or may select an icon or a menu item to receive a function which corresponds thereto.

At this time, the screen of the electronic apparatus 100 may include a display panel (not shown) configured to perform a display function for information output from the electronic apparatus 100. The display panel may be implemented with a panel such as a liquid crystal display (LCD) or an active matrix organic light emitting diode (AMOLED) and may display various screens according to various operation states, application execution, and service to be provided.

The electronic apparatus 100 may selectively sense a touch by using one touch method or by using a plurality of touch methods. For example, the electronic apparatus 100 may selectively use an infrared method or an EMR method (or an electromagnetic induction (EMI) method), but is not limited thereto.

The infrared method is a method in which a plurality of infrared (IR) light-emitting modules (not shown) and a plurality of IR sensor modules (not shown) are disposed in an edge of a screen, and a location touched on the screen is calculated based on a location of a corresponding sensor module by considering that a touch unit has been touched when an infrared signal emitted from a IR light-emitting module has not arrived at the IR sensor module.

The EMR method is a method which senses a touch or a proximity input according to a change in an intensity of an electromagnetic field by a proximity or touch of a pen, for example, a digitizer pen (hereinafter, referred to as a pen) in which a resonance circuit is embedded.

Types of touch units which can sense the above methods may be different from each other. For example, in the infrared method, an object which can block or reflect an infrared signal, such as a hand or a pen, may be applied as the touch unit in that the infrared method senses a touch based on whether or not the infrared signal is sensed. To the contrary, in the EMR method, an object which can generate current based on electromagnetic induction, such as a pen in which a resonance circuit is embedded, may be applied as the touch unit in that the EMR method senses a touch based on a change in intensity of an electromagnetic field.

Specifically, the electronic apparatus 100 may recognize proximity or touch through the EMR method when a pen enters a sensing distance which can be sensed in the EMR method. That is, the electronic apparatus 100 may also sense proximity or touch through the infrared method when the touch unit is a pen. However, when the electronic apparatus 100 first senses the pen through the EMR method rather than through the infrared method, the electronic apparatus 100 only recognizes the proximity or the touch using the EMR method.

When a touch to a touch unit is not configured to be sensed in the EMR method, such as a hand being close to the electronic apparatus 100, the electronic apparatus 100 only recognizes the touch using the infrared method.

Hereinafter, the electronic apparatus 100 performing the operations of the exemplary embodiments will be described in detail.

The touch may include a state in which a touch unit is in contact with the screen as well as a state in which a touch unit is not in direct contact with the screen but is close to the screen.

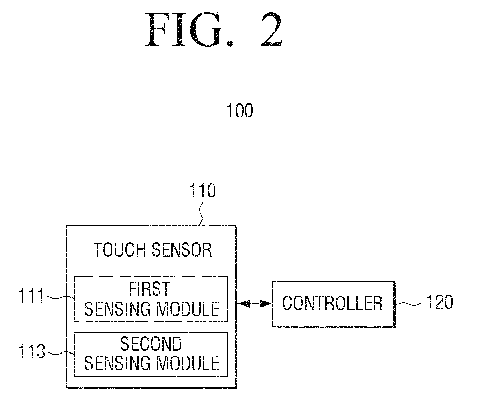

FIG. 2 is a block diagram which illustrates a configuration of an electronic apparatus according to an exemplary embodiment. Referring to FIG. 2, an electronic apparatus 100 may include a touch sensor 110 and a controller 120.

The touch sensor 110 is configured to sense a touch on a screen using a first touch method and a second touch method, which is different from the first touch method. The first touch method may be an EMR touch method, and the second touch method may be an infrared touch method.

To this end, the touch sensor 110 may include sensing modules configured to sense proximity or a touch through the touch methods. For example, the touch sensor 110 may include a first sensing module 111 configured to sense a touch through the EMR touch method and a second sensing module 113 may be configured to sense a touch through the infrared touch method.

Specifically, the touch sensor 110 may include an IR light-emitting module (not shown) and an IR sensor module (not shown) which are configured to sense a touch through the infrared method and may be disposed in an edge of the screen, to be spaced apart from each other by a fixed interval. The IR light-emitting module may be implemented with an IR LED, and the IR sensor module may be implemented with a phototransistor.

Further, the touch sensor 110 may include a pen recognition panel (not shown) disposed below the screen and configured to sense a touch through an EMR method. When a pen is close to or has touched the pen recognition panel (or a digitizer), the pen recognition panel (or the digitizer) may sense the proximity or the touch according to a change in an intensity of an electromagnetic field, due to the proximity or touch of the pen.

Specifically, the pen recognition panel may be configured to include an electromagnetic induction coil (not shown) in which a plurality of loop coils are disposed in a predetermined first direction and a predetermined second direction which crosses the first direction, in order to establish a grid structure and an electronic signal processor (not shown) configured to sequentially provide an alternating current (AC) signal having a predetermined frequency to the loop coils of the electromagnetic induction coil.

When a pen, in which a resonance circuit is embedded, exists around a loop coil of the pen recognition panel, a magnetic field transmitted from the loop coil generates a current based on mutual electromagnetic induction in the resonance circuit of the pen. An induction field from a coil constituting the resonance circuit in the pen is generated based on the current, and the pen recognition panel detects the induction field in the loop coil which is in a signal reception state, in order to sense a proximity location or a touch location of the pen.

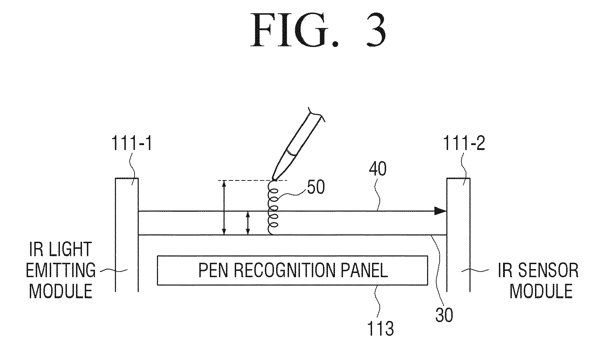

A sensing distance of the first sensing module may be preset to be larger than that of the second sensing module, based on the screen. Therefore, a touch unit configured to sense both the first sensing module and the second sensing module, for example, a pen, may be sensed in the EMR method rather than in the infrared method when the pen gradually approaches the screen. A detailed description thereof will be provided with reference to FIG. 3.

FIG. 3 is a view which illustrates a method of sensing proximity or touch in an infrared method and an EMR method, according to an exemplary embodiment. For purposes of clarity, FIG. 3 illustrates a schematic cross-sectional view of an electronic apparatus 100.

Referring to FIG. 3, in the infrared method, the IR light-emitting module 111-1 emits infrared light 40 toward an IR sensor module 111-2 which is disposed to face the IR light-emitting module 111-1, and the IR sensor module 111-2 senses a touch based on whether or not the infrared light 40 is sensed in the IR sensor module 110-2.

In the EMR method, when a magnetic field 50 transmitted from a loop coil provided in a pen recognition panel 113 arrives at a tip of the pen, an induction field is generated from a coil constituting a resonance circuit in the pen 20, and the pen recognition panel 113 senses the generated induction field in order to sense a touch.

As described above, the electronic apparatus 100 according to an exemplary embodiment may be set to sense a touch at a location far from a screen through the EMR method, rather than with the infrared method.

That is, an intensity of the magnetic field 50 may be set so that a location in which the magnetic field 50 transmitted from a loop coil in the pen recognition panel 113 is formed farther than a location in which the infrared light 40 is emitted from the IR light-emitting module 111-1 toward the IR sensor module 111-2, on the basis of the screen 30. Therefore, the touch sensor 110 may first sense the pen 20 which is gradually approaching the screen through the EMR touch method rather than through the infrared touch method.

Referring back to FIG. 2, the controller 120 may control an overall operation of the electronic apparatus 100. The controller 120 may include a microcomputer, i.e., a microcomputer and a central processing unit (CPU), a random access memory (RAM) for an operation of the electronic apparatus 100, and a read only memory (ROM). The modules may be implemented in a system on chip (SoC).

The controller 120 may determine a touch operation on the screen based on sensing a result in the touch sensor 110.

First, in the infrared method, the controller 120 may determine a location and coordinates of a touch point input on the screen, the number of touch points, and the presence/absence of a ghost image by using a location of an IR sensor module (not shown) on which infrared output from in an IR light-emitting module (nor shown) is sensed or based on a magnitude of a sensed current (or voltage).

In the EMR method, the controller 120 may determine a touch or proximity based on change in an intensity of an electromagnetic field. Specifically, the controller 120 may determine whether the touch unit is close or has been touched based on an intensity of an induction magnetic field received from a touch unit, a location of a loop coil to which the induction magnetic field is received, and the like, or may determine a location and coordinates of a proximity or touch point, the number of the proximity or touch points, and the like.

The controller 120 may control the touch sensor 110 to sense a touch by selectively applying one of the first touch method and the second touch method which is sensed according to a type of touch unit.

Specifically, when a touch unit is configured to be sensed in both the first and second sensing modules 111 and 113 and is close to a sensing distance of the first sensing module 111, the controller 120 may sense a touch of the touch unit through the first sensing module 111, and may turn off the second sensing module 113. A touch unit which is configured to be sensed in the first and second sensing modules 111 and 113 may include a digitizer pen.

When a touch unit not configured to be sensed in the first sensing module 111 is close to a sensing distance of the second sensing module 113, the controller 120 may sense a touch of the touch unit through the second sensing module 113 and may turn off the first sensing module 111. A touch unit not configured to sense the first sensing module 111 may be a touch unit which is not configured to sense the first sensing module 111 but is configured to sense the second sensing module 113, and may include various touch units other than a pen.

That is, when a touch unit approaching the screen is sensed through one of the first and second sensing modules 111 and 113 in a state in which both the first and second sensing modules 111 and 113 are turned on (or enabled), the controller 120 may continuously sense the touch unit through the sensed sensing module and may turn off (disable) the other sensing module.

Hereinafter, for clarity, an assumption is made that the first touch method is the infrared method, the second touch method is the EMR method, the touch unit configured to be sensed in the first and second sensing modules is a pen, and the touch unit not configured to be sensed in the first sensing module is a hand, and an operation of the controller 120, will be described in detail.

First, the controller 120 turns on both the sensing modules 111 and 113 which are configured to sense a touch in the EMR method and the infrared method (that is, the EMR method is a pen recognition panel, and the infrared method is an IR light-emitting module and an IR sensor module). For example, the controller 120 may set the sensing modules configured to sense a touch through the EMR method and the infrared method to be in an ON state by applying power to the sensing modules or by turning on an operation state of the sensing modules in a power application state.

Next, when a pen approaches the screen, the controller 120 may first determine the proximity of the pen based on a sensing result of the first sensing module 111 which is configured to sense a touch through the EMR method, rather than through the infrared method. As shown in FIG. 3, this is because a magnetic field used in sensing through the EMR method is formed in a farther location than a location used in sensing through the infrared method, on the basis of the screen.

When an approaching pen is sensed through the EMR method, the controller 120 turns off the second sensing module 113 which is configured to sense a touch through the infrared method and to continuously sense proximity or a touch of the pen only using the first sensing module 111 which is configured to sense a touch through the EMR method. At this time, the controller 120 may interrupt power applied to the second sensing module 113 which is configured to sense the touch through the infrared method or turning off an operation state of the second sensing module 113, in a state in which the power is applied to the second sensing module 113.

When a hand approaches the screen, the first sensing module 111 configured to sense a touch through the EMR method may sense the hand. That is, even when a magnetic field is formed in a location farther than a location in which an infrared signal is generated on the basis of the screen, since the hand cannot generate an induction field, the first sensing module 111 may not sense the hand approaching the screen.

At this time, the controller 120 determines a touch of the hand based on a sensing result of the second sensing module 113, which is configured to sense the touch through the infrared method.

In this way, when the touch of the hand is sensed through the infrared method, the controller 120 controls to turn off the first sensing module 111 which is configured to sense the touch through the EMR method and to continuously sense the touch of the hand only using the second sensing module 113, which is configured to sense the touch through the infrared method. At this time, the controller 120 may interrupt power applied to the first sensing module 111 which is configured to sense the touch through the EMR method or to turn off an operation state of the first sensing module in a state in which the power is applied to the first sensing module.

The controller 120 may control to perform various functions according to the sensed proximity or touch. Specifically, the controller 120 may display a handwriting image in a location of the sensed proximity or touch point, or may execute various functions such as application execution, sub menu item display, or the like, by selecting an icon, a menu item, or the like, at the touch point.

When the proximity or touch by the touch unit cannot be sensed any more, the controller 120 may set both the first touch method and the second touch method to be in an ON state again. This is to selectively sense proximity or a touch on the screen through the first sensing method or again through the second sensing method after the proximity or touch is released.

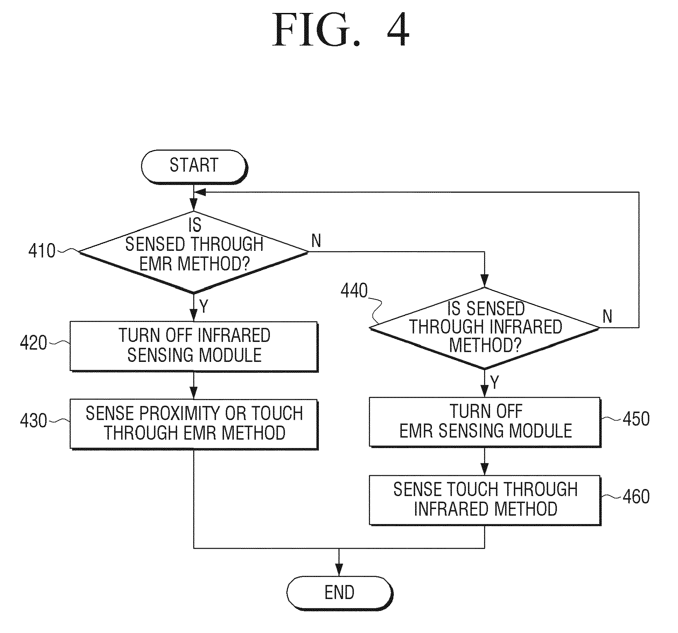

FIG. 4 is a flowchart which illustrates an operation of an electronic apparatus according to an exemplary embodiment.

First, the electronic apparatus 100 determines whether or not a touch is sensed through an EMR method (S410).

In response to a determination that the touch is sensed through the EMR method, as a determination result (S410-Y), the electronic apparatus 100 turns off a sensing module configured to sense the touch through an infrared method (S420). The electronic apparatus 100 may continuously sense proximity or a touch on a screen through the EMR method (S430).

In response to a determination that the touch is not sensed through the EMR method (410-N), the electronic apparatus 100 determines whether or not the touch is sensed through the infrared method (S440).

In response to a determination that the touch is sensed through the infrared method, as a determination result (S440-Y), the electronic apparatus 100 turns off a sensing module configured to sense the touch through the EMR method (S450). The electronic apparatus 100 may continuously sense proximity or a touch on the screen through the infrared method (S460).

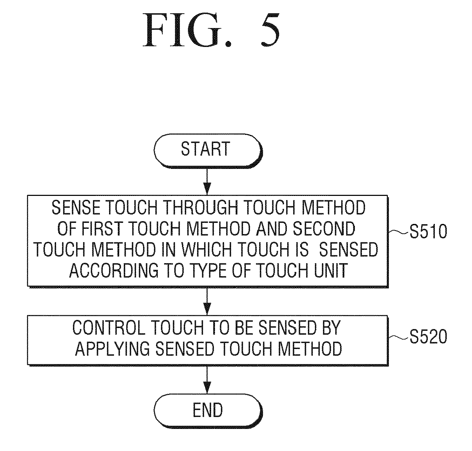

FIG. 5 is a flowchart which illustrates a touch sensing method according to an exemplary embodiment. In particular, FIG. 5 is a flowchart which illustrates a touch sensing method of an electronic apparatus which is configured to sense a touch on a screen using a first touch method or a second touch method.

First, a touch is sensed through one of the first touch method and the second touch method, in which the touch is sensed according to a method sensed or selected according the type of touch unit (S510). The first touch method may be an EMR method, and the second touch method may be an infrared method. The electronic apparatus may include a first sensing module which is configured to sense the touch through the EMR method and a second sensing module which is configured to sense the touch through the infrared method.

A sensing distance of the first sensing module may be preset to be larger than that of the second sensing module, based on the screen.

Next, the electronic apparatus controls sensing of the touch by applying the sensed touch method (S520).

Specifically, when a touch unit is configured to be sensed in both the first and second sensing modules and the touch is close to the sensing distance of the first sensing module, the electronic apparatus may sense a touch of the touch unit through the first sensing module and may turn off the second sensing module. Here, the touch unit configured to sense both the first and second sensing modules may be a digitizer pen.

When a touch unit, such as a user's finger is not configured to be sensed in the first sensing module and is close to the sensing distance of the second sensing module, the electronic apparatus may sense a touch of the touch unit through the second sensing module and may turn off the first sensing module.

The detailed operation thereof has been described with reference to FIGS. 1 to 4.

A non-transitory computer-recordable storage medium in which a program for sequentially performing the touch sensing method according to the above-described exemplary embodiment is stored may be provided.

The non-transitory computer-recordable storage medium is not a medium configured to temporarily store data such as a register, a cache, or a memory but rather is an apparatus-readable medium configured to semi-permanently store data. Specifically, the above-described various applications or programs may be stored in the non-transitory apparatus-readable storage medium, such as a compact disc (CD), a digital versatile disc (DVD), a hard disc, a Blu-ray Disc™, a universal serial bus (USB), a memory card, a ROM, and the like, may be provided.

Further, although a bus is not illustrated in the block diagram which illustrates the electronic apparatus, communication between components in the electronic apparatus may be performed through the bus. A processor such as a CPU or a microprocessor configured to perform the above-described operations may be further included.

The foregoing exemplary embodiments and advantages are merely exemplary and are not to be construed as limiting the invention. The exemplary embodiments can be readily applied to other types of devices. Also, the description of the exemplary embodiments is intended to be illustrative, and not to limit the scope of the claims, and many alternatives, modifications, and variations will be apparent to those skilled in the art.

## Claims

1. An electronic apparatus supporting a plurality of touch methods, the electronic apparatus comprising:
a touch sensor configured to sense a touch on a screen using a first touch method or a second touch method; and
a controller configured to control the touch sensor to selectively apply one of the first touch method and the second touch method sensed according to a type of touch unit.

2. The electronic apparatus as claimed in claim 1, wherein the first touch method is an electromagnetic resonance (EMR) type, and the second touch method is an infrared type, and
the touch sensor includes:
a first sensing module configured to sense the touch using the EMR type; and
a second sensing module configured to sense the touch using the infrared type.

3. The electronic apparatus as claimed in claim 2, wherein a sensing distance of the first sensing module is preset to be larger than that of the second sensing module based on the screen.

4. The electronic apparatus as claimed in claim 3, wherein when a touch unit configured to be sensed both the first and second sensing modules is close to the sensing distance of the first sensing module, the controller is configured to sense a touch of the touch unit through the first sensing module and is configured to turn off the second sensing module.

5. The electronic apparatus as claimed in claim 4, wherein the touch unit which can be sensed in the first and second sensing modules is a digitizer pen.

6. The electronic apparatus as claimed in anyone of claims 2 to 5, wherein when a touch unit not configured to be sensed in the first sensing module is close to a sensing distance of the second sensing module, the controller senses a touch of the touch unit to the second sensing module and is configured to turn off the first sensing module.

7. A method of sensing a touch of an electronic apparatus configured to sense a touch on a screen using a first touch method or a second touch method, the method comprising:
sensing the touch through one of the first touch method and the second touch method, in which the touch method is sensed according to a type of touch unit; and
controlling the sensing of the touch by applying the sensed touch method.

8. The method as claimed in claim 7, wherein the first touch method is an electromagnetic resonance (EMR) type, and the second touch method is an infrared type, and
the electronic apparatus includes:
a first sensing module configured to sense the touch using the EMR type of touch method; and
a second sensing module configured to sense the touch using the infrared type of touch method.

9. The method as claimed in claim 8, wherein a sensing distance of the first sensing module is preset to be larger than that of the second sensing module based on the screen.

10. The method as claimed in claim 9, wherein when a touch unit configured to be sensed in both the first and second sensing modules and the touch unit is close to the sensing distance of the first sensing module, the controlling includes sensing a touch through the first sensing module and turning off the second sensing module.

11. The method as claimed in claim 10, wherein the touch unit sensed in the first and second sensing modules is a digitizer pen.

12. The method as claimed in any one of claims 8 to 11, wherein the controlling includes sensing the touch through the second sensing module and turning off the first sensing module when a touch unit is not configured to sense the first sensing module and the touch unit is close to a sensing distance of the second sensing module.
